# EUROPÄISCHE PATENTSCHRIFT

(11) **EP 3 449 136 B1**
(45) Veröffentlichungstag und Bekanntmachung des Hinweises auf die Patenterteilung: **03.11.2021**
(21) Anmeldenummer: 16798106.7
(22) Anmeldetag: 08.11.2016
(51) Int. Cl.: F16B 12/20, F16B 13/12, F16B 12/26, F16B 5/00

(54) **DOPPELVERBINDER ZUM STOSSVERBINDEN ZWEIER BAUTEILE**
DOUBLE CONNECTOR FOR BUTT-JOINING TWO PARTS
ÉLÉMENT DE RACCORDEMENT DOUBLE SERVANT À RÉALISER UN ABOUTAGE DE DEUX PIÈCES

(30) Priorität: 25.04.2016 DE 202016102176 U
(43) Veröffentlichungstag der Anmeldung: 06.03.2019
(73) Patentinhaber: Häfele SE & Co KG, 72202 Nagold (DE)
(72) Erfinder: NITSCHMANN, Gunter, 72285 Pfalzgrafenweiler (DE); ARNOLD, Lory, 6300 Zug (CH)
(74) Vertreter: Kohler Schmid Möbus Patentanwälte
(86) Internationale Anmeldenummer: PCT/EP2016/076990
(87) Internationale Veröffentlichungsnummer: WO 2017/186318

(56) Entgegenhaltungen:
- DE-A1- 3 245 948
- DE-U1- 29 512 775
- FR-A- 1 546 888
- US-B1- 6 299 397

## Beschreibung

Die Erfindung betrifft einen Doppelverbinder zum Stoßverbinden zweier Bauteile gemäß dem Oberbegriff von Anspruch 1 und eine Anordnung mit einem solchen Doppelverbinder.

Ein solcher Doppelverbinder zum Stoßverbinden zweier Bauteile ist beispielsweise durch die US 6 299 397 B1 bekannt geworden.

Zum Stoßverbinden zweier Möbelteile sind beispielsweise Exzenter-Verbindungsbeschläge bekannt, bei denen ein Bolzen in das eine Möbelteil eingeschraubt und ein verdrehbarer Exzenter in eine Bohrung des anderen Möbelteils eingesetzt wird. Mithilfe eines Werkzeugs wird der Exzenter gedreht und dadurch der Bolzen angezogen, bis beide Möbelteile aneinander anliegen.

Der aus der eingangs genannten US 6 299 397 B1 bekannte Doppelverbinder zum Stoßverbinden zweier Bauteile umfasst zwei baugleiche Verbinderhälften und eine von außen betätigbare Exzenternocke zum Verschieben der beiden Verbinderhälften gegeneinander. Das eine Ende der Verbinderhälften ist als geschlitzte Spreizmuffe und das andere Ende als Keilelement ausgebildet, wobei jeweils das Keilelement der einen Verbinderhälfte in die Spreizmuffe der anderen Verbinderhälfte eingreift, so dass beim Ineinanderschieben der beiden Verbinderhälften die beiden Spreizmuffen aufgespreizt werden.

Es ist demgegenüber die Aufgabe der vorliegenden Erfindung, einen Verbinder anzugeben, mit dem zwei Bauteile, wie z.B. zwei Möbelplatten, werkzeuglos und unsichtbar miteinander befestigt werden können. Zudem soll der Verbinder plattenstärkenunabhängig immer in der Mitte der Platten sitzen.

Diese Aufgabe wird erfindungsgemäß durch einen Doppelverbinder zum Stoßverbinden zweier Bauteile mit den Merkmalen des Anspruchs 1 gelöst.

Erfindungsgemäß sind die ersten Endabschnitte der beiden Verbinderteile jeweils in die Bohrungen der Bauteile eingesetzt und darin durch die zweiten Endabschnitte der zusammengeschobenen Verbinderteile jeweils nach außen aufgespreizt. In der Montagestellung sind die Verbinderteile einerseits durch die aufgespreizten ersten Endabschnitte fest in den Bohrungswandungen der Bauteile verankert und andererseits durch die miteinander verriegelten Verbinderteile gegen ein Zurückschieben gesichert. Die beiden Bügel werden um 90° gegeneinander verdreht mit den freien Bügelenden des einen Bügels zwischen die freien Bügelenden des jeweils anderen Bügels ineinander eingesteckt, und zwar vorteilhaft über die spätere Montagestellung hinaus bis in eine verrastete Vormontagestellung, in der die freien Bügelenden des einen Bügels in dessen Einsteckrichtung über den mittleren Bügelarm des jeweils anderen Bügels vorstehen. In dieser Vormontagestellung sind die beiden Bügel zueinander vorfixiert (Transportsicherheit) und werden beim Zusammenschieben der Bauteile aus der Vormontagestellung zurück bis in die Montagestellung zusammengeschoben.

Vorzugsweise sind die beiden Verbinderteile baugleich ausgebildet. Die beiden Verbinderteile bewegen sich synchron zueinander, was den Vorteil hat, dass der Weg bei der Endmontage halbiert ist, da sich die Einzelteile gegenseitig synchron bewegen. Durch die vorzugsweise identischen Teile ist auch eine lageunabhängige Montage möglich, d.h. der Endanwender kann den vormontierten Doppelverbinder nicht falsch montieren.

Der erfindungsgemäße Doppelverbinder kann universell zum Verbinden zweier beliebiger, auch unterschiedlicher Bauteile eingesetzt werden, beispielsweise in der Möbelbranche zum Verbinden zweier Möbelteile oder in der Automobil- oder Medizintechnik.

Besonders bevorzugt weist jeder Bügel an den einander abgewandten Außenseiten seiner beiden äußeren Bügelarme einen Außenabsatz auf, der das Einsetzen der äußeren Bügelarme in die Bohrung des Bauteils begrenzt, wobei der Außenabstand der beiden Bügelarme ausgehend von der Außenabmessung des mittleren Bügelarms bis zum Außenabsatz kontinuierlich ansteigt. Die beiden Bügelarme mit ihrem ansteigenden Außendurchmesser werden beim Eintritt in die Bohrung auf den Bohrungsdurchmesser zusammengedrückt, wodurch auch die Randkragen radial nach innen bewegt werden, bis sie idealerweise vollständig verschwinden ("verschwindende Randabtastung").

Vorzugsweise weist jeder Bügel an den einander abgewandten Außenseiten seiner beiden freien Bügelenden mindestens eine Querrippe zum Eindrücken in die Bohrungswandung auf.

Die beiden Bügel können als separate Teile oder, was besonders vorteilhaft ist, als ein einziges Spritzgießteil gefertigt sein, bei dem die beiden Bügel an den Stirnseiten ihrer beiden freien Bügelenden jeweils über eine Sollbruchstelle miteinander einstückig verbunden sind.

Vorzugsweise sind die Verbinderteile mit Leim gefüllt, der dann beim Zusammenschieben der Verbinderteile herausgedrückt wird.

Die Erfindung betrifft schließlich auch eine Anordnung mit zwei aneinander anliegenden Bauteilen und mit einem wie oben ausgebildeten Doppelverbinder, wobei die ersten Endabschnitte der beiden Verbinderteile jeweils in eine Bohrung der Bauteile eingesetzt und darin durch die zweiten Endabschnitte der zusammengeschobenen Verbinderteile jeweils nach außen aufgespreizt sind und die beiden Verbinderteile miteinander verriegelt sind.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen im Rahmen des durch die Ansprüche abgedeckten Schutzbereichs Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein erstes Ausführungsbeispiel des erfindungsgemäßen Doppelver-binders mit zwei U-bügelförmigen Verbinderteilen im noch nicht in-einandergesteckten Zustand;
- Fign. 2a, 2b: den in Fig. 1 gezeigten Doppelverbinder mit den beiden ineinander-gesteckten Verbinderteilen in einer Vormontagestellung (Fig. 2a) und in einer verriegelten Montagestellung (Fig. 2b);
- Fign. 3a-3c: Detailansichten der beiden ineinandergesteckten Verbinderteile der Fign. 2a, 2b in der Vormontagestellung (Fig. 3a), in der Verriege-lungsstellung (Fig. 3b) und beim anfänglichen Ineinanderstecken der beiden Verbinderteile, jeweils in einem Längsschnitt;
- Fig. 4: ein nicht erfindungsgemäßes, zweites Ausführungsbeispiel des Dop-pelverbinders mit zwei steckerförmigen Verbinderteilen im noch nicht ineinandergesteckten Zustand;
- Fign. 5a, 5b: den in Fig. 4 gezeigten Doppelverbinder mit den beiden ineinander-gesteckten Verbinderteilen in einer Vormontagestellung (Fig. 5a) und in einer verriegelten Montagestellung (Fig. 5b); und
- Fign. 6a-6c: Detailansichten der beiden ineinandergesteckten Verbinderteile der Fign. 5a, 5b in der Vormontagestellung (Fign. 6a, 6b) und in einer Zwischenstellung zwischen Vormontage- und Montagestellung (Fig. 6c), jeweils in einem Längsschnitt.

In der folgenden Figurenbeschreibung werden für gleiche bzw. funktionsgleiche Bauteile identische Bezugszeichen verwendet.

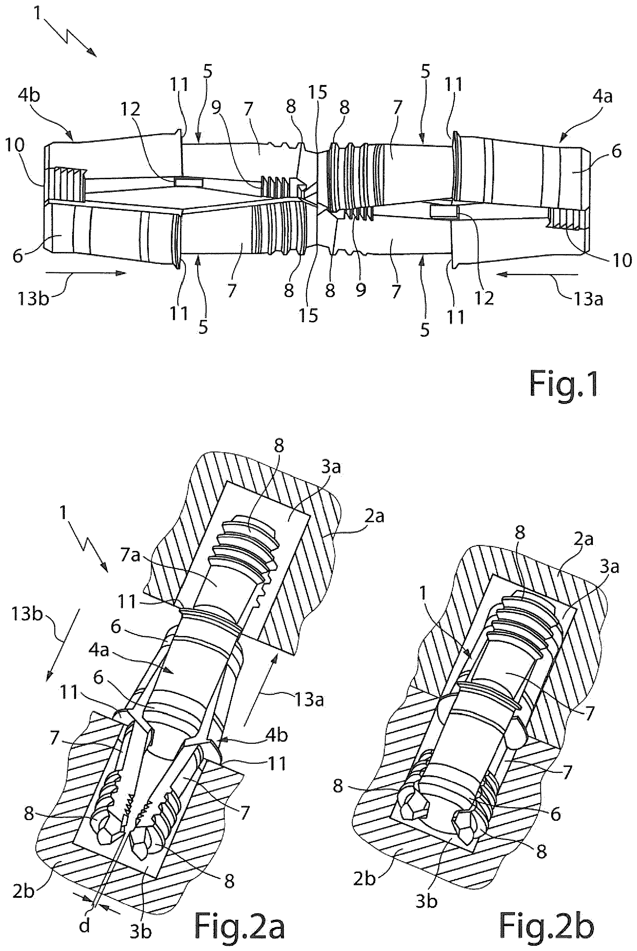

Der in **Fign. 1 und 2** gezeigte Doppelverbinder **1** dient zum Stoßverbinden zweier flächig aneinander anliegender Möbelteile **2a, 2b,** die jeweils eine Aufnahmebohrung **3a, 3b** aufweisen.

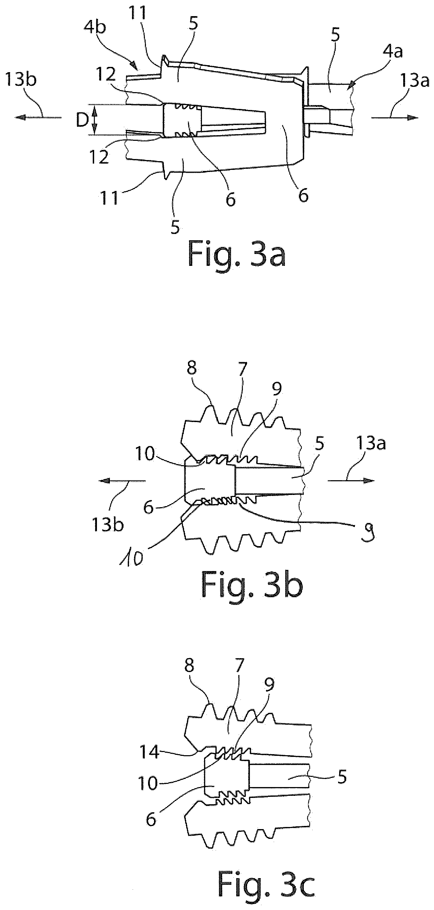

Der Doppelverbinder 1 umfasst zwei Verbinderteile in Form von U-förmigen Bügeln **4a, 4b.** die im gezeigten Ausführungsbeispiel baugleich ausgebildet sind, aber auch unterschiedlich ausgebildet sein können. Die beiden Bügel 4a, 4b weisen jeweils zwei gegeneinander aufspreizbare äußere Bügelarme **5** und einen dazwischenliegenden mittleren Bügelarm **6** auf. Die freien Bügelenden **7** der beiden äußeren Bügelarme 5 bilden den einen aufspreizbaren ersten Endabschnitt und der mittlere Bügelarm 6 den anderen zweiten Endabschnitt der Verbinderteile. Die Dicke **D** (Fig. 3a) des mittleren Bügelarms 6 quer zur Spreizrichtung der beiden äußeren Bügelarme 5 ist größer als der lichte Abstand **d** der beiden freien Bügelenden 7.

Die beiden freien Bügelenden 7 weisen an ihren einander abgewandten Außenseiten mehrere krallenartige Querrippen **8** und an ihren einander zugewandten Innenseiten mehrere querverlaufende Innenrasten **9** auf. Der mittlere Bügelarm 6 weist an seinen beiden einander abgewandten Querseiten mehrere querverlaufende Außenrasten **10** auf. Alternativ kann auch nur eine einzige Außenraste 10 vorgesehen sein. Etwa auf halber Länge weisen die Bügelarme 5 an ihren einander abgewandten Außenseiten jeweils einen als Randkragen ausgebildeten Außenabsatz **11** und an ihren einander zugewandten Innenseiten jeweils eine Raststufe **12** auf. Der Außendurchmesser (Außenabstand) der beiden Bügelarme 5 steigt ausgehend vom Außendurchmesser (Außenabmessung) des mittleren Bügelarms 6 bis zum Außenabsatz 11 kontinuierlich auf einen Außendurchmesser (Außenabstand) an, der größer als der Bohrungsdurchmesser der Bohrung 2a, 2b ist, und springt anschließend auf den Außendurchmesser (Außenabstand) der freien Bügelenden 7 zurück, der auf der gesamten Länge der freien Bügelenden 7 gleich ist und ungefähr dem Außendurchmesser des mittleren Bügelarms 6 entspricht.

Mit ihren freien Bügelenden 7 einander zugewandt und um 90° gegeneinander verdreht (Fig. 1), werden die beiden Bügel 4a, 4b mit den freien Bügelenden 7 des einen Bügels 4a, 4b zwischen die freien Bügelenden 7 des anderen Bügels 4b, 4a in Steckrichtung **13a** bzw. **13b** - über die spätere Montagestellung hinaus - bis in eine Vormontagestellung (Fig. 2a) ineinander eingesteckt. In dieser Vormontagestellung stehen die freien Bügelenden 7 des einen Bügels 4a, 4b in dessen Einsteckrichtung 13a, 13b jeweils über den mittleren Bügelarm 6 des jeweils anderen Bügels 4b, 4a vor. Wie in **Fig. 3a** im Detail gezeigt ist, sind in der Vormontagestellung die mittleren Bügelarme 6 in den beiden Raststufen 12 des jeweils anderen Bügels 4a, 4b eingerastet und dadurch zueinander vorfixiert und gegen unbeabsichtigtes Zusammenschieben gesichert.

Wie in Fig. 2a weiter gezeigt, wird dieser vormontierte Doppelverbinder 1 zuerst mit den beiden freien Bügelenden 7 des einen Bügels 4a in die Bohrung 3a des einen Möbelteils 2a und dann mit den beiden freien Bügelenden 7 des anderen Bügels 4b in die Bohrung 3b des anderen Möbelteils 2b jeweils soweit eingesteckt, bis die Bügel 4a, 4b mit ihren Außenabsätzen 11 an den Möbelteilen 2a, 2b anliegen. Mit anderen Worten sind die Bohrungen 3a, 3b tiefer als die darin einzusetzenden freien Bügelenden 7 der Bügels 4a, 4b, so dass die Außenabsätze 11 einen das Einsetzen begrenzenden Tiefenanschlag bilden.

Abschließend werden die beiden Möbelteile 2a, 2b bis zur gegenseitigen Anlage zusammengeschoben und dadurch die beiden Bügel 4a, 4b aus der Vormontagestellung entgegen ihrer ursprünglichen Steckrichtung 13a, 13b in ihre Montagestellung zusammengeschoben (Fig. 2b). Beim Zusammenschieben der beiden Bügel 4a, 4b werden zunächst die mittleren Bügelarme 6 aus den Raststufen 12 entrastet und treten auf den ersten 3mm des Zusammenschiebens kraftlos in die Bohrungen 2a, 2b ein. Die beiden Bügelarme 5 mit ihrem ansteigenden Außendurchmesser werden beim Eintritt in die Bohrung 2a, 2b auf den Bohrungsdurchmesser zusammengedrückt, wodurch auch die Randkragen 11 radial nach innen bewegt werden, bis sie sich schließlich nur noch mit ihrer äußersten Randfläche an dem Möbelteil 2a, 2b abstützen. Somit liegen die Randkragen 11 am Anfang des Zusammenschiebens noch mit einer großen Abstützfläche am Möbelteil 2a, 2b an, um die Kräfte beim Zusammenschieben des Doppelverbinders 1 abzufangen, bis sich die Querrippen 8 in die Bohrungswandung einzugraben beginnen. Die wirksame Abstützfläche der Randkragen 11 wird mit zunehmendem Zusammenschieben immer kleiner, bis die Abstützung fast vollständig oder vollständig verschwindet, um eine Spaltbildung zwischen den Möbelteilen 2a, 2b zu vermeiden. Je weiter der Bügel 4a, 4b mit seinem mittleren Bügelarm 6 also in der Bohrung 2a, 2b sitzt, desto geringer ist die wirksame Abstützfläche der Randkragen 11 ("verschwindende Randabtastung").

Beim Zusammenschieben des Doppelverbinders 1 werden parallel zur immer weiter verschwindenden Randabtastung die beiden freien Bügelenden 7 des einen Bügels 4a, 4b durch den mittleren Bügelarm 6 des jeweils anderen Bügels 4b, 4a immer weiter aufgespreizt, wodurch die Querrippen 8 in die Wandung der Bohrung 3a, 3b eingedrückt werden.

Wie in **Fig. 3b** im Detail gezeigt, greifen in der Montagestellung die Innenrasten 9 der freien Bügelenden 7 und die Außenrasten 10 der mittleren Bügelarme 6 ineinander, wodurch die beiden Bügel 4a, 4b miteinander verriegelt und somit gegen ein Zurückschieben gesichert sind. Damit die Stufen der Rasterung möglichst fein sind, um bestmögliche Spielfreiheit der Verbindung zu gewährleisten, sind die einander gegenüberliegenden Außenrasten 10 des mittleren Bügelarms 6, wie in Fig. 3b gezeigt, jeweils um eine halbe Rastenlänge zueinander versetzt.

Die Rasterung besteht deshalb aus mehreren Innen- und Außenrasten 9, 10, um ein unterschiedlich tiefes Eindrücken der Randkragen 11 in das Plattenmaterial auszugleichen. Bei einem 90°-Stoß zweier als Möbelplatten ausgebildeten Möbelteile 2a, 2b befindet sich die eine Bohrung in der Plattenfläche der einen Möbelplatte und die andere in der Stirnseite der zweiten Möbelplatte. Der Doppelverbinder 1 wird sich in die stirnseitige Bohrung eindrücken, da hier die weiche Mittelschicht der Spanplatte vorliegt, welche nur wenig Widerstand bieten kann. Da es nicht bekannt ist, wie tief sich der Doppelverbinder 1 eindrückt, muss hierfür ein Ausgleich geschaffen werden, was über verschiedene Positionen der Rasterung erfolgt. Läge nur eine Position der gegenseitigen Verrastung vor, ergäben sich zwei Fälle: Entweder die Verbindung wackelt, da Luft zwischen den Verrastungen vorhanden ist, oder die Verrastungsposition kann gar nicht erreicht werden, wenn sich der Doppelverbinder 1 zu tief in die weiche Stirnkante eingräbt.

Damit die Innen- und Außenrasten 9, 10 das anfängliche Ineinanderstecken der beiden Bügel 4a, 4b bis in die Vormontagestellung nicht behindern, weisen die beiden freien Bügelenden 7 an ihren einander zugewandten Innenseiten jeweils einen Vorsprung (Nase) **14** auf **(****Fig. 3c****).** Der Vorsprung 14 ist den Innenrasten 9 in Steckrichtung 13a, 13b des Bügels 4a, 4b vorgeordnet und steht weiter nach innen als die Innenrasten 9 vor. Beim anfänglichen Ineinanderstecken heben die freien Bügelenden 7 mit ihren Vorsprüngen 14 an den mittleren Bügelarm 6 des anderen Bügels 4b, 4a ab und überspringen so die Außenrasten 10 der mittleren Bügelarme 6. Der Vorsprung 14 kann so schmal ausgeführt sein, dass er in der Montagestellung vollständig plattgedrückt wird.

In der Montagestellung liegen die beiden Möbelteile 2a, 2b aneinander an, wobei sich die Randkragen 11 fast vollständig oder vollständig innerhalb der Bohrungen 2a, 2b befinden. Die beiden Bügel 4a, 4b sind einerseits durch die Querrippen 8 ihrer aufgespreizten freien Bügelenden 7 fest in den Bohrungswandungen der Möbel 2a, 2b verankert und andererseits durch die miteinander verriegelten Innen- und Außenrasten 9, 10 aneinander gesichert, so dass die beiden Möbelteile 2a, 2b aneinander befestigt sind. Die gesamte Verbindungsmontage der beiden Möbelteile 2, 3 mittels des Doppelverbinders 1 erfolgt somit vollständig werkzeuglos.

Die Raststufen 12 dienen einerseits im vormontierten Zustand als Transportsicherung und anderseits im einseitig eingesetzten Zustand als Sicherung gegen unbeabsichtigtes Zusammendrücken der beiden Bügel 4a, 4b bis zur gegenseitigen Verriegelung, wodurch der Doppelverbinder 1 nicht mehr in die andere Bohrung eingesetzt werden kann und daher unbrauchbar wäre. Steckt einer der beiden Bügel 4a, 4b mit seinen freien Bügelenden 7 bereits in einer Bohrung, wird die Verrastung 12 verstärkt, da die freien Bügelenden 7 durch die Bohrung fixiert sind und nicht nach außen ausweichen können. Die zum Zusammenzudrücken der beiden Bügel 4a, 4b erforderliche Kraft ist folglich deutlich größer, wenn der Dübel bereits in eine Bohrung eingesetzt ist.

Beim Verbinden zweier Möbelteile 2, 3 mit jeweils mehreren Bohrungen 2a, 3a werden zuerst in alle Bohrungen 2a des ersten Möbelteils 2 (z.B. des Bodens eines Schranks) jeweils Doppelverbinder 1 bis zum Randkragen 11 eingesteckt. Dann wird das zweite Möbelteil 3 (z.B. ein Seitenteil des Schranks) mit seinen Bohrungen 3b jeweils auf die Doppelverbinder 1 bis zum Randkragen 11 aufgesteckt und dann bis zur Anlage am ersten Möbelteil 2 zusammengedrückt. Die gesamte Verbindungsmontage der beiden Möbelteile 2, 3 mittels der Doppelverbinder 1 erfolgt somit vollständig werkzeuglos.

Wie in Fig. 1 angedeutet, kann der Doppelverbinder 1 mit seinen beiden Bügeln 4a, 4b als ein einstückiges Gussteil aus Kunststoff gefertigt sein, wobei die beiden Bügel 4a, 4b an den Stirnseiten ihrer beiden freien Bügelenden 7 jeweils über eine Sollbruchstelle **15** miteinander einstückig verbunden sind.

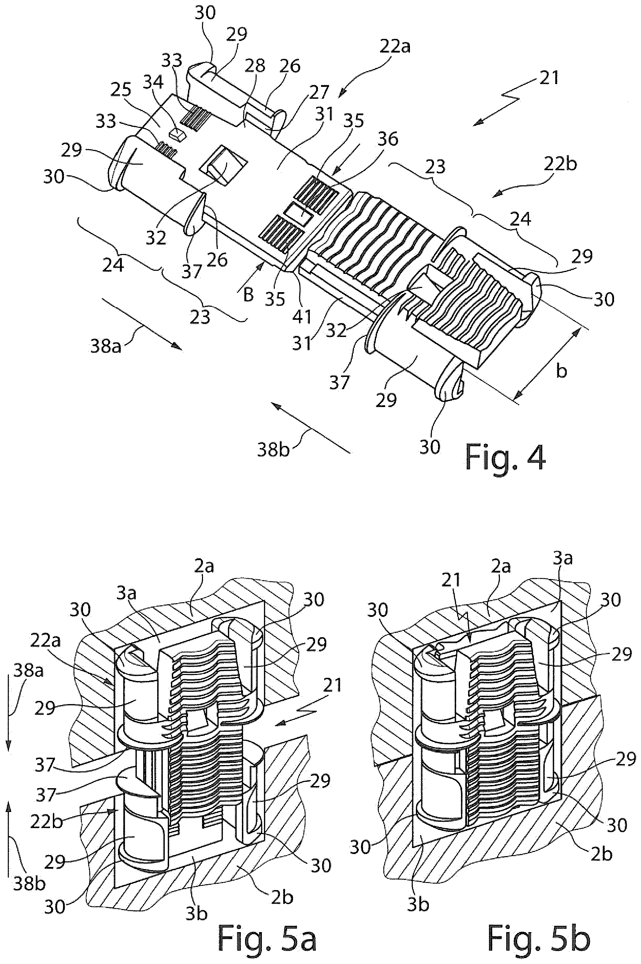

Der in **Fign. 4 und 5** gezeigte Doppelverbinder **21** umfasst zwei Verbinderteile in Form von zwei vorzugsweise baugleich ausgebildeten Steckerteilen **22a, 22b,** die jeweils einenends einen Steckabschnitt **23** und andernends einen Steckaufnahmeabschnitt **24** aufweisen. Der Steckaufnahmeabschnitt 24 weist eine Bodenplatte **25,** zwei Seitenwände **26** mit innenseitigen Führungsnuten **27,** welche zusammen mit der Bodenplatte 25 einen Führungskanal **28** für den Steckabschnitt 23 des jeweils anderen Steckerteils definieren, und zwei nach innen in den Führungskanal 28 vorstehende, gegeneinander aufspreizbare Seitenlaschen **29** auf. Der Steckaufnahmeabschnitt 24 mit seinen Seitenlaschen 29 bildet den einen aufspreizbaren ersten Endabschnitt und der Steckabschnitt 23 den anderen zweiten Endabschnitt der Verbinderteile. Die Breite **B** des Steckabschnitts 23 ist größer als der lichte Abstand **b** der beiden Seitenlaschen 29, die an ihren einander abgewandten Außenseiten jeweils eine krallenartige Querrippe **30** aufweisen. Der Steckabschnitt 23 ist durch eine Steckplatte **31** gebildet, wobei die Bodenplatte 25 und die Steckplatte 31 zusammen eine durchgehende Platte ausbilden.

Der Steckaufnahmeabschnitt 24 weist an der Innenseite seiner Bodenplatte 25 sowohl mittig zwischen den beiden Seitenwänden 26 eine in den Führungskanal 28 stehende Rastfeder (Federzunge) **32** als auch auf Höhe der Seitenlaschen 29 zwei seitliche Reihen von Rastvorsprüngen **33** mit einer dazwischen angeordneten Auflaufschräge **34** auf. Der Steckabschnitt 23 weist auf der Innenseite seiner Steckplatte 31 ebenfalls zwei seitliche Reihen von Rastvertiefungen **35** und dazwischen eine Rastvertiefung **36** auf. Weiterhin ist zwischen dem Steckabschnitt 23 und dem Steckaufnahmeabschnitt 24 beidseitig ein als Randkragen ausgebildeter Außenabsatz **37** vorgesehen.

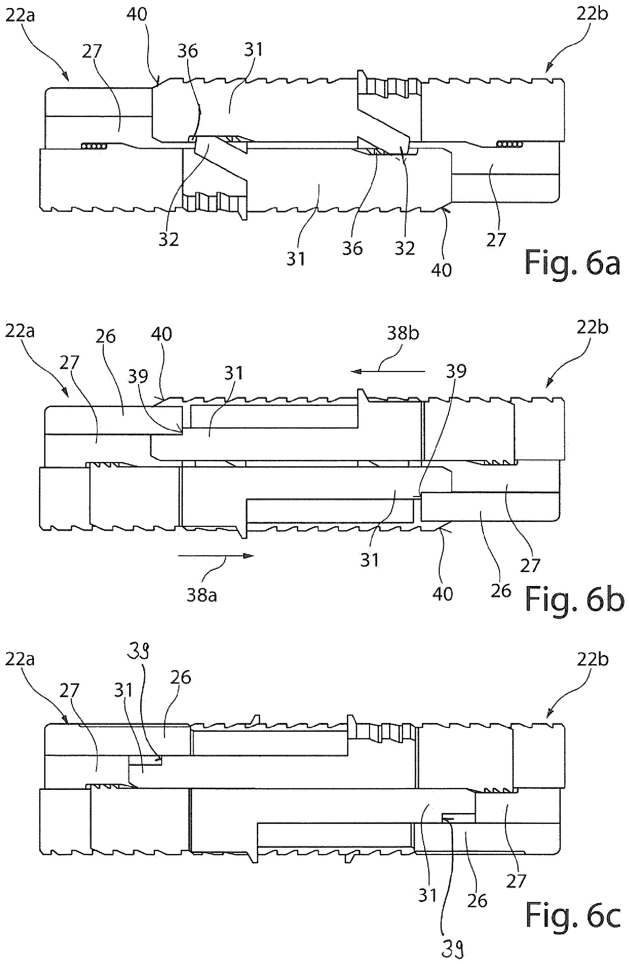

Mit ihren Steckabschnitten 23 einander zugewandt und um 90° gegeneinander verdreht (Fig. 4), werden die beiden Steckerteile 22a, 22b mit den Steckabschnitten 23 in die Führungskanäle 28 des jeweils anderen Steckerteils 22a, 22b in Steckrichtung **38a, 38b** bis in eine Vormontagestellung (Fig. 5a) ineinander eingesteckt. In dieser Vormontagestellung sind die Rastfedern 32 in den Rastvertiefungen 36 des jeweils anderen Steckerteils 22a, 22b eingerastet und dadurch zueinander vorfixiert. Die Rastfedern 32 verhindern auch ein unbeabsichtigtes Zusammendrücken der vormontierten Steckerteile 22a, 22b (Fehlbediensicherung). Einerseits verrasten die Rastfedern 32 in den Rastvertiefungen 36 und definieren die Position der Vormontage. Zusätzlich drückt die verbleibende Federkraft der Rastfedern 32 die beiden Steckerteile 22a, 22b jedoch um 0,5mm in Querrichtung, also rechtwinklig zur Boden- und Steckplatte 25, 31, auseinander **(****Fig. 6a****),** so dass der Steckabschnitt 23 mit einem Absatz **39** gegen die Stirnseite der Seitenwand 26 des anderen Steckerteils läuft **(****Fig. 6b****)** und nicht weiter in die Führungsnut 27 des anderen Steckerteils eintreten kann.

Wie in Fig. 5a weiter gezeigt, wird der vormontierte Doppelverbinder 1 zuerst mit dem Steckaufnahmeabschnitt 24 des einen Steckteils 22a in die Bohrung 3a des einen Möbelteils 2a und dann mit dem Steckaufnahmeabschnitt 24 des anderen Steckteils 22b in die Bohrung 3b des anderen Möbelteils 2b jeweils soweit eingesteckt, bis die Steckerteile 22a, 22b mit ihren Außenabsätzen 37 an dem jeweiligen Möbelteil 2a, 2b anliegen. Mit anderen Worten sind die Bohrungen 3a, 3b tiefer als die darin einzusetzenden Steckaufnahmeabschnitte 24 der Steckerteile 22a, 22b, so dass die Außenabsätze 37 einen das Einsetzen begrenzenden Tiefenanschlag bilden. Beim Einstecken des Doppelverbinders 21 treten die Steckabschnitte 23 der beiden Steckerteile 22a, 22b jeweils mit einer Einführfase **40** voran in die Bohrungen 3a, 3b ein, wodurch die beiden Steckerteile 22a, 22b in Querrichtung auf den Bohrungsdurchmesser zusammengedrückt werden. Dadurch wird die Blockierung des Steckabschnitts 23 in der Führungsnut 27 aufgehoben, und die beiden Steckerteile 22a, 22b können weiter ineinander geschoben werden **(****Fig. 6c****).**

Abschließend werden die beiden Möbelteile 2a, 2b bis zur gegenseitigen Anlage zusammengeschoben und dadurch die beiden Steckerteile 22a, 22b aus der Vormontagestellung in Steckrichtung 38a, 38b weiter bis in ihre Montagestellung zusammengeschoben (Fig. 5b). Beim Zusammenschieben der beiden Steckerteile 22a, 22b werden zunächst die Rastfedern 32 aus den Rastvertiefungen 36 entrastet und anschließend die Seitenlaschen 29 des einen Steckerteils 22a, 22b durch den eingesteckten Steckabschnitt 23 des jeweils anderen Steckerteils 22a, 22b aufgespreizt, wodurch die Querrippen 30 in die Wandung der Bohrung 3a, 3b eingedrückt werden. In der Montagesteilung greifen die Rastvorsprünge 33, 35 der beiden Steckerteile 22a, 22b ineinander, wodurch die beiden Steckerteile 22a, 22b gegen ein Zurückschieben verriegelt sind.

Beim Zusammenschieben der beiden Steckerteile 22a, 22b heben die Steckabschnitte 23 mit ihren vorderen Stirnenden **41** an den Auflaufschrägen 34 des jeweils anderen Steckerteils 22, 22b ab, so dass die vordersten der Rastvorsprünge 33, 35 einander überspringen, bis in der Montagestellung dann schließlich alle Rastvorsprünge 33, 35 ineinandergreifen. Ohne die Auflaufschrägen 34 könnten sich beim Zusammenschieben der beiden Steckerteile 22a, 22b die zuerst aufeinandertreffenden vordersten Rastvorsprünge 33, 35 gegenseitig so verformen, dass sie in der Montagestellung nicht mehr in anderen Rastvorsprünge eingreifen können und die gegenseitige Verriegelung der beiden Steckerteile 22a, 22b nicht mehr ausreichend gegeben ist.

In der Montagestellung liegen die beiden Möbelteile 2a, 2b aneinander an, wobei die Randkragen 37 in die Möbelteile 2a, 2b vollständig eingedrückt sind. Die beiden Steckerteile 22a, 22b sind einerseits durch die Querrippen 30 ihrer aufgespreizten Seitenlaschen 29 fest in den Bohrungswandungen der Möbel 2a, 2b verankert und andererseits durch die miteinander verriegelten Rastvorsprünge 33, 35 aneinander gesichert, so dass die beiden Möbelteile 2a, 2b aneinander befestigt sind. Damit die Stufen der Rasterung möglichst fein sind, um bestmögliche Spielfreiheit der Verbindung zu gewährleisten, sind die beiden Reihen von Rastvorsprüngen 33 jeweils um eine halbe Rastenlänge zueinander versetzt. Die gesamte Verbindungsmontage der beiden Möbelteile 2, 3 mittels des Doppelverbinders 21 erfolgt somit vollständig werkzeuglos.

Die Rasterung besteht deshalb aus mehreren Rastvorsprünge 33, 35, um ein unterschiedlich tiefes Eindrücken der Randkragen 37 in das Plattenmaterial auszugleichen. Bei einem 90°-Stoß zweier als Möbelplatten ausgebildeten Möbelteile 2a, 2b befindet sich die eine Bohrung in der Plattenfläche der einen Möbelplatte und die andere in der Stirnseite der zweiten Möbelplatte. Der Doppelverbinder 21 wird sich in die stirnseitige Bohrung eindrücken, da hier die weiche Mittelschicht der Spanplatte vorliegt, welche nur wenig Widerstand bieten kann. Da es nicht bekannt ist, wie tief sich der Doppelverbinder 21 eindrückt, muss hierfür ein Ausgleich geschaffen werden, was über verschiedene Positionen der Rasterung erfolgt. Läge nur eine Position der gegenseitigen Verrastung vor, ergäben sich zwei Fälle: Entweder die Verbindung wackelt, da Luft zwischen den Verrastungen vorhanden ist, oder die Verrastungsposition kann gar nicht erreicht werden, wenn sich der Doppelverbinder 21 zu tief in die weiche Stirnkante eingräbt.

Der Außenquerschnitt der zusammengeschobenen Steckerteile 22a, 22b entspricht dem Bohrungsquerschnitt der Bohrungen 3a, 3b, die jeweils durch drei miteinander überlappende Kreislochbohrungen gebildet sind. Die Kombination von drei miteinander überlappenden Kreislochbohrungen hat gegenüber einer aufwändigeren Langlochfräsung den Vorteil, dass sowohl eine Fertigung auf Bohraggregaten mit Standardwerkzeugen als auch eine Fertigung mit Handmaschinen am Montageort möglich sind. Die beiden Steckerteile 22a, 22b können aus Kunststoff gefertigt sein.

Die Rastfedern 32 dienen einerseits im vormontierten Zustand als Transportsicherung und anderseits im einseitig eingesetzten Zustand als Sicherung gegen unbeabsichtigtes Zusammendrücken der beiden Steckerteile 22a, 22b bis zur gegenseitigen Verriegelung, wodurch der Doppelverbinder 21 nicht mehr in die andere Bohrung eingesetzt werden kann und daher unbrauchbar wäre.

Beim Verbinden zweier Möbelteile 2, 3 mit jeweils mehreren Bohrungen 2a, 3a werden zuerst in alle Bohrungen 2a des ersten Möbelteils 2 (z.B. des Bodens eines Schranks) jeweils Doppelverbinder 21 bis zum Randkragen 37 eingesteckt. Dann wird das zweite Möbelteil 3 (z.B. ein Seitenteil des Schranks) mit seinen Bohrungen 3b jeweils auf die Doppelverbinder 21 bis zum Randkragen 37 aufgesteckt und dann bis zur Anlage am ersten Möbelteil 2 zusammengedrückt. Die gesamte Verbindungsmontage der beiden Möbelteile 2, 3 mittels der Doppelverbinder 21 erfolgt somit vollständig werkzeuglos.

Wie in Fig. 4 angedeutet, kann der Doppelverbinder 21 mit seinen beiden Steckerteilen 22a, 22b als ein einstückiges Gussteil aus Kunststoff gefertigt sein, wobei die beiden Steckerteile 22a, 22b z.B. an den Stirnseiten ihrer beiden Steckabschnitte 23 über eine Sollbruchstelle (nicht gezeigt) miteinander einstückig verbunden sind.

Die beiden Verbinderteile 4a, 4b bzw. 22a, 22b bewegen sich synchron zueinander, was den Vorteil hat, dass der Weg bei der Endmontage halbiert ist, da sich die Einzelteile gegenseitig synchron bewegen. Durch die identischen Verbinderteile ist auch eine lageunabhängige Montage möglich, d.h. der Endanwender kann den vormontierten Doppelverbinder 1, 21nicht falsch montieren.

Optional zu der reinen Verrastung und Verkrallung kann auch Leim (z.B. Weißleim) hinzugegeben werden, um die sowieso als nicht demontierbar ausgelegte Verbindung noch stabiler zu machen. Hierbei wird der Leim nicht in die Bohrung, sondern vor der Endmontage direkt in entsprechende Hohlräume der Verbinderteile 4a, 4b bzw. 22a, 22b gegeben. Vorteil ist eine definierte Position und Dosierung des Leims dort, wo dieser benötigt wird. Beim Zusammenschieben (Endmontage) wird der Leim dann herausgedrückt. Eine mögliche zusätzliche Verleimung wird umso wichtiger, da die Plattenqualität kontinuierlich sinkt (aus Kostengründen). Um den Halt des Leims am Doppelverbinder 1, 21 ohne Tropfen zu gewährleisten, kann ein spezieller niedrigviskoser Leim verwendet werden. Der Doppelverbinder 1, 21 kann folglich universell mit oder ohne Leimzugabe eingesetzt werden, je nach Anwendungsfall.

Der Doppelverbinder 1, 21 kann nicht nur, wie in den gezeigten Ausführungsbeispielen, zum Verbinden zweier Möbelteile 2a, 2b, sondern universell zum Verbinden zweier beliebiger, auch unterschiedlicher Bauteile eingesetzt werden. Es sind prinzipiell auch Anwendungen in der Automobil- oder Medizintechnik bzw. anderen Branchen möglich.

## Patentansprüche

1. Doppelverbinder (1) zum Stoßverbinden zweier Bauteile (2a, 2b), mit zwei bis in eine verriegelte Montagestellung zusammenschiebbaren Verbinderteilen (4a, 4b), die jeweils einen aufspreizbaren ersten Endabschnitt (5) zum Einsetzen in eine Bohrung (3a, 3b) eines Bauteils (2a, 2b), und einen zweiten Endabschnitt (6) zum Aufspreizen des ersten Endabschnitts (5) des jeweils anderen Verbinderteils in der Montagestellung und mindestens einen Verriegelungsabschnitt (9, 10) zum gegenseitigen Verriegeln der beiden Verbinderteile (4a, 4b) in der Montagestellung aufweisen, **dadurch gekennzeichnet,**
**dass** die beiden Verbinderteile jeweils als ein U-förmiger Bügel (4a, 4b) mit zwei gegeneinander aufspreizbaren, äußeren Bügelarmen (5) und mit einem dazwischenliegenden mittleren Bügelarm (6) ausgebildet sind, wobei die Dicke (D) des mittleren Bügelarms (6) quer zur Spreizrichtung der beiden äußeren Bügelarme (5) desselben Verbinderteils größer als der lichte Abstand (d) der beiden freien Bügelenden (7) ist.

2. Doppelverbinder nach Anspruch 1, **dadurch gekennzeichnet, dass** die beiden Verbinderteile (4a, 4b) baugleich sind.

3. Doppelverbinder nach Anspruch 1 oder 2, **dadurch gekennzeichnet, dass** die beiden Bügel (4a, 4b) um 90° gegeneinander verdreht mit den freien Bügelenden (7) des einen Bügels (4a, 4b) zwischen die freien Bügelenden (7) des jeweils anderen Bügels (4b, 4a) über die spätere Montagestellung hinaus bis in eine Vormontagestellung ineinander eingesteckt sind, in der die freien Bügelenden (7) des einen Bügels (4a, 4b) in dessen Einsteckrichtung (13a, 13b) über den mittleren Bügelarm (6) des jeweils anderen Bügels (4a, 4b) vorstehen, und dass die beiden Bügel (4a, 4b) aus der Vormontagestellung zurück bis in die Montagestellung zusammenschiebbar sind.

4. Doppelverbinder nach einem der vorhergehenden Ansprüche, **dadurch gekennzeichnet, dass** die beiden Bügel (4a, 4b) in der Vormontagestellung miteinander verrastet sind.

5. Doppelverbinder nach Anspruch 4, **dadurch gekennzeichnet, dass** zumindest einer der beiden Bügel (4a, 4b) an den einander zugewandten Innenseiten seiner beiden äußeren Bügelarme (5) jeweils eine Raststufe (12) aufweist, in der der mittlere Bügelarm (6) des jeweils anderen Bügels (4a, 4b) entgegen dessen Einsteckrichtung (13b, 13a) in der Vormontagestellung verrastet ist.

6. Doppelverbinder nach einem der vorhergehenden Ansprüche, **dadurch gekennzeichnet, dass** jeder Bügel (4a, 4b) an den einander abgewandten Außenseiten seiner beiden äußeren Bügelarme (5) einen Außenabsatz (11) aufweist, der das Einsetzen der äußeren Bügelarme (5) in die Bohrung (3a, 3b) des Bauteils (2a, 2b) begrenzen kann.

7. Doppelverbinder nach Anspruch 6, **dadurch gekennzeichnet, dass** der Außenabstand der beiden Bügelarme (5) ausgehend von der Außenabmessung des mittleren Bügelarms (6) bis zum Außenabsatz (11) kontinuierlich ansteigt.

8. Doppelverbinder nach einem der vorhergehenden Ansprüche, **dadurch gekennzeichnet, dass** jeder Bügel (4a, 4b) an den einander zugewandten Innenseiten seiner beiden freien Bügelenden (7) mindestens eine Innenraste (9) und an den einander abgewandten Außenseiten seines mittleren Bügelarms (6) mindestens eine Außenraste (10) aufweist, wobei in der Montagestellung die Innen- und Außenrasten (9, 10) der beiden Bügel (4b, 4a) verriegelnd ineinandergreifen.

9. Doppelverbinder nach Anspruch 8, **dadurch gekennzeichnet, dass** jeder Bügel (4a, 4b) an den einander zugewandten Innenseiten seiner beiden freien Bügelenden (7) einen der mindestens einen Innenraste (9) in Steckrichtung (13a, 13) vorgeordneten Vorsprung (14) aufweist, der nach innen weiter als die mindestens eine Innenraste (9) vorsteht.

10. Doppelverbinder nach Anspruch 8 oder 9, **dadurch gekennzeichnet, dass** jeder Bügel (4a, 4b) an den einander zugewandten Innenseiten seiner beiden freien Bügelenden (7) mehrere in Steckrichtung (13a, 13b) hintereinander angeordnete Innenrasten (9) und an den einander abgewandten Außenseiten seines mittleren Bügelarms (6) mehrere in Steckrichtung (13a, 13b) hintereinander angeordnete Außenrasten (10) aufweist, wobei in der Montagestellung zumindest einige der Innen- und Außenrasten (9, 10) der beiden Bügel (4b, 4a) verriegelnd ineinandergreifen.

11. Doppelverbinder nach Anspruch 10, **dadurch gekennzeichnet, dass** die Innenrasten (9) der beiden freien Bügelenden (7) jeweils um eine halbe Rastenlänge zueinander versetzt sind oder die einander abgewandten Außenrasten (10) des mittleren Bügelarms (6) jeweils um eine halbe Rastenlänge zueinander versetzt sind.

12. Doppelverbinder nach einem der vorhergehenden Ansprüche, **dadurch gekennzeichnet, dass** jeder Bügel (4a, 4b) an den einander abgewandten Außenseiten seiner beiden freien Bügelenden (7) mindestens eine Querrippe (8) aufweist.

13. Doppelverbinder nach einem der vorhergehenden Ansprüche, **dadurch gekennzeichnet, dass** die beiden Bügel (4a, 4b) an den Stirnseiten ihrer beiden freien Bügelenden (7) jeweils über eine Sollbruchstelle (15) miteinander einstückig verbunden sind.

14. Doppelverbinder nach einem der vorhergehenden Ansprüche, **dadurch gekennzeichnet, dass** die Verbinderteile (4a, 4b) mit Leim gefüllt sind.

15. Anordnung mit zwei aneinander anliegenden Bauteilen (2a, 2b) und mit einem Doppelverbinder (1) nach einer der vorhergehenden Ansprüche, wobei die ersten Endabschnitte (5) der beiden Verbinderteile (4a, 4b) jeweils in eine Bohrung (3a, 3b) der Bauteile (2a, 2b) eingesetzt und darin durch die zweiten Endabschnitte (6) der zusammengeschobenen Verbinderteile (4a, 4b) jeweils nach außen aufgespreizt sind und die beiden Verbinderteile (4a, 4b) miteinander verriegelt sind.

## Claims

1. A double connector (1) for butt-joining two part (2a, 2b), comprising two connector components (4a, 4b) which can be pushed together as far as a locked assembly position and which each comprise a spreadable first end portion (5) for inserting into a hole (3a, 3b) of a part (2a, 2b), and a second end portion (6) for spreading the first end portion (5) of the other connector component in each case in the assembly position and at least one locking portion (9, 10) for interlocking the two plug components (4a, 4b) in the assembly position,
**characterized in that**
the two connector components are each constructed as a U-shaped clamp (4a, 4b) having two outer clamp arms (5) which can be spread with respect to each other and having a middle clamp arm (6) which is located therebetween, wherein the thickness (D) of the middle clamp arm (6) transversely with respect to the spreading direction of the two outer clamp arms (5) of the same connector component is greater than the clear spacing (d) of the two free clamp ends (7).

2. The double connector as claimed in claim 1, **characterized in that** the two connector components (4a, 4b) are structurally identical.

3. The double connector as claimed in claim 1 or 2, **characterized in that** the two clamps (4a, 4b) are rotated through 90° with respect to each other, with the free clamp ends (7) of one clamp (4a, 4b) inserted one into the other between the free clamp ends (7) of the other clamp (4b, 4a) in each case beyond the subsequent assembly position as far as a preassembly position, in which the free clamp ends (7) of one clamp (4a, 4b) protrude in the insertion direction (13a, 13b) thereof beyond the middle clamp arm (6) of the other clamp (4a, 4b) in each case, and **in that** the two clamps (4a, 4b) can be pushed together from the preassembly position back into the assembly position.

4. The double connector as claimed in any one of the preceding claims, **characterized in that** the two clamps (4a, 4b) are locked together in the preassembly position.

5. The double connector as claimed in claim 4, **characterized in that** at least one of the two clamps (4a, 4b) has at the inner sides of the two outer clamp arms (5) thereof facing each other a locking step (12) in each case, in which the middle clamp arm (6) of the other clamp (4a, 4b) in each case is locked counter to the insertion direction (13b, 13a) thereof in the preassembly position.

6. The double connector as claimed in any one of the preceding claims, **characterized in that** each clamp (4a, 4b) has at the outer sides of the two outer clamp arms (5) thereof facing away from each other an outer shoulder (11) which can limit the insertion of the outer clamp arms (5) in the hole (3a, 3b) of the part (2a, 2b).

7. The double connector as claimed in claim 6, **characterized in that** the outer spacing of the two clamp arms (5) starting from the outer dimension of the middle clamp arm (6) continuously increases as far as the outer shoulder (11).

8. The double connector as claimed in any one of the preceding claims, **characterized in that** each clamp (4a, 4b) has at the inner sides of the two free clamp ends (7) facing each other at least one inner catch (9) and at the outer sides of the middle clamp arm (6) thereof facing away from each other at least one outer catch (10), wherein in the assembly position the inner and outer catches (9, 10) of the two clamps (4b, 4a) engage in each other in a locking manner.

9. The double connector as claimed in claim 8, **characterized in that** each clamp (4a, 4b) has at the inner sides of the two free clamp ends (7) thereof facing each other a protrusion (14) which is arranged upstream of the at least one inner catch (9) in the insertion direction (13a, 13) and which protrudes inward further than the at least one inner catch (9).

10. The double connector as claimed in claim 8 or 9, **characterized in that** each clamp (4a, 4b) has at the inner sides of the two free clamp ends (7) thereof facing each other a plurality of inner catches (9) which are arranged one after the other in the insertion direction (13a, 13b) and at the outer sides of the middle clamp arm (6) thereof facing away from each other a plurality of outer catches (10) which are arranged one after the other in the insertion direction (13a, 13b), wherein in the assembly position at least some of the inner and outer catches (9, 10) of the two clamps (4b, 4a) engage in each other in a locking manner.

11. The double connector as claimed in claim 10, **characterized in that** the inner catches (9) of the two free clamp ends (7) are each offset relative to each other by half the length of a catch or the outer catches (10) of the middle clamp arm (6) facing away from each other are offset with respect to each other by half the length of a catch.

12. The double connector as claimed in any one of the preceding claims, **characterized in that** each clamp (4a, 4b) has at the outer sides of the two free clamp ends (7) thereof facing away from each other at least one transverse rib (8).

13. The double connector as claimed in any one of the preceding claims, **characterized in that** the two clamps (4a, 4b) are integrally connected to each other at the end sides of the two free clamp ends (7) thereof by means of a predetermined breaking point (15).

14. The double connector as claimed in one of the preceding claims, **characterized in that** the connector components (4a, 4b) are filled with glue.

15. An arrangement comprising two mutually abutting components (2a, 2b) and a double connector (1) as claimed in one of the preceding claims, wherein the first end portions (5) of the two connector components (4a, 4b) are each inserted into a hole (3a, 3b) of the parts (2a, 2b) and are spread outward therein by the second end portions (6) of the connector components (4a, 4b) which have been pushed together and the two connector components (4a, 4b) are locked together.

## Revendications

1. Elément de liaison double (1) dévolu au raccordement par aboutage de deux pièces structurelles (2a, 2b), comprenant deux parties de liaison (4a, 4b) aptes à coulisser conjointement jusqu'à une position de montage verrouillée et comportant, à chaque fois, une première zone d'extrémité (5) déployable, destinée à être insérée dans un perçage (3a, 3b) d'une pièce structurelle (2a, 2b), une seconde zone d'extrémité (6) dédiée au déploiement de la première zone d'extrémité (5) de l'autre partie de liaison considérée, dans la position de montage, et au moins une zone de verrouillage (9, 10) affectée au verrouillage mutuel des deux parties de liaison (4a, 4b), dans ladite position de montage, **caractérisé par le fait**
**que** les deux parties de liaison sont respectivement réalisées sous la forme d'un support (4a, 4b) configuré en U, muni de deux bras extérieurs (5) déployables l'un vis-à-vis de l'autre, et d'un bras médian (6) interposé entre eux, l'épaisseur (D) du bras médian (6) des supports étant supérieure à l'espacement intérieur (d) des deux extrémités libres (7) desdits supports transversalement par rapport à la direction du déploiement des deux bras extérieurs (5) des supports de la même partie de liaison.

2. Elément de liaison double selon la revendication 1, **caractérisé par le fait que** les deux parties de liaison (4a, 4b) présentent des structures identiques.

3. Elément de liaison double selon la revendication 1 ou 2, **caractérisé par le fait que** les deux supports (4a, 4b), en déport l'un de l'autre de 90°, sont emboîtés l'un dans l'autre par les extrémités libres (7) de l'un (4a, 4b) desdits supports, entre les extrémités libres (7) de l'autre support (4b, 4a) considéré, avec dépassement de la position de montage ultérieur, jusqu'à une position de montage préalable dans laquelle les extrémités libres (7) de l'un (4a, 4b) desdits supports font saillie, dans la direction d'emboîtement (13a, 13b) de ce dernier, au-delà du bras médian (6) de l'autre support (4b, 4a) considéré ; et **par le fait que** les deux supports (4a, 4b) sont aptes à effectuer un coulissement rétrograde conjoint, jusqu'à la position de montage, à partir de ladite position de montage préalable.

4. Elément de liaison double selon l'une des revendications précédentes, **caractérisé par le fait que** les deux supports (4a, 4b) sont solidarisés par encliquetage dans la position de montage préalable.

5. Elément de liaison double selon la revendication 4, **caractérisé par le fait qu'**au moins l'un des deux supports (4a, 4b) est respectivement doté, sur les faces intérieures de ses deux bras extérieurs (5) tournées l'une vers l'autre, d'un gradin d'encliquetage (12) dans lequel le bras médian (6) de l'autre support (4b, 4a) considéré est cranté, dans la position de montage préalable, en sens inverse de la direction d'emboîtement (13b, 13a) de ce dernier.

6. Elément de liaison double selon l'une des revendications précédentes, **caractérisé par le fait que** chaque support (4a, 4b) est pourvu, sur les faces extérieures de ses deux bras extérieurs (5) pointant à l'opposé l'une de l'autre, d'un décrochement extérieur (11) apte à limiter l'insertion desdits bras extérieurs (5) dudit support dans le perçage (3a, 3b) de la pièce structurelle (2a, 2b).

7. Elément de liaison double selon la revendication 6, **caractérisé par le fait que** l'espacement extérieur des deux bras (5) des supports croît continûment, jusqu'au décrochement extérieur (11), à partir de la cote extérieure du bras médian (6) desdits supports.

8. Elément de liaison double selon l'une des revendications précédentes, **caractérisé par le fait que** chaque support (4a, 4b) est muni d'au moins un cran intérieur (9) sur les faces intérieures de ses deux extrémités libres (7), tournées l'une vers l'autre, et d'au moins un cran extérieur (10) sur les faces extérieures de son bras médian (6) pointant à l'opposé l'une de l'autre, sachant que lesdits crans intérieur et extérieur (9, 10) des deux supports (4b, 4a) s'interpénètrent dans la position de montage, avec effet de verrouillage.

9. Elément de liaison double selon la revendication 8, **caractérisé par le fait que** chaque support (4a, 4b) est doté, sur les faces intérieures de ses deux extrémités libres (7), tournées l'une vers l'autre, d'une protubérance (14) qui est située en amont du cran intérieur (9) à présence minimale, dans la direction (13a, 13b) de l'emboîtement, et fait davantage saillie, vers l'intérieur, que ledit cran intérieur (9) à présence minimale.

10. Elément de liaison double selon la revendication 8 ou 9, **caractérisé par le fait que** chaque support (4a, 4b) est doté, sur les faces intérieures de ses deux extrémités libres (7), tournées l'une vers l'autre, de plusieurs crans intérieurs (9) agencés en succession dans la direction (13a, 13b) de l'emboîtement et, sur les faces extérieures de son bras médian (6) pointant à l'opposé l'une de l'autre, de plusieurs crans extérieurs (10) agencés en succession dans ladite direction (13a, 13b) de l'emboîtement, sachant qu'au moins quelques-uns desdits crans intérieurs et extérieurs (9, 10) des deux supports (4b, 4a) s'interpénètrent dans la position de montage, avec effet de verrouillage.

11. Elément de liaison double selon la revendication 10, **caractérisé par le fait que** les crans intérieurs (9) des deux extrémités libres (7) des supports sont mutuellement décalés, à chaque fois, d'une demi-longueur desdits crans, ou bien que les crans extérieurs (10) du bras médian (6) desdits supports, pointant à l'opposé l'un de l'autre, sont mutuellement décalés, à chaque fois, d'une demi-longueur desdits crans.

12. Elément de liaison double selon l'une des revendications précédentes, **caractérisé par le fait que** chaque support (4a, 4b) est pourvu d'au moins une nervure transversale (8) sur les faces extérieures de ses deux extrémités libres (7), pointant à l'opposé l'une de l'autre.

13. Elément de liaison double selon l'une des revendications précédentes, **caractérisé par le fait que** les deux supports (4a, 4b) sont respectivement reliés l'un à l'autre d'un seul tenant, sur les faces extrêmes de leurs deux extrémités libres (7), par l'intermédiaire d'une zone (15) de rupture par destination.

14. Elément de liaison double selon l'une des revendications précédentes, **caractérisé par le fait que** les parties de liaison (4a, 4b) sont emplies de colle.

15. Agencement comprenant deux pièces structurelles (2a, 2b) en applique l'une contre l'autre et un élément de liaison double (1) conforme à l'une des revendications précédentes, les premières zones d'extrémité (5) des deux parties de liaison (4a, 4b) étant respectivement insérées dans un perçage (3a, 3b) desdites pièces structurelles (2a, 2b) dans lequel elles sont, à chaque fois, déployées vers l'extérieur par les secondes zones d'extrémité (6) desdites parties de liaison (4a, 4b) animées d'un coulissement conjoint, et lesdites deux parties de liaison (4a, 4b) étant solidarisées par verrouillage.
